(19) Europäisches Patentamt
European Patent Office
Office européen des brevets

(11) EP 0 687 104 B1

(12) **EUROPEAN PATENT SPECIFICATION**

(45) Date of publication and mention
of the grant of the patent:
**19.08.1998 Bulletin 1998/34**

(51) Int Cl.6: **H04N 5/14**, H04N 5/44

(21) Application number: 95108074.6

(22) Date of filing: **26.05.1995**

(54) **A method for detecting edge direction in an interlaced television image**

Verfahren zum Detektieren der Flankenrichtung in einem Fernsehbild mit Zeilensprungverfahren

Procédé pour détecter la direction des flancs dans une image de télévision entrelacée

(84) Designated Contracting States:
**DE FR GB IT**

(30) Priority: **10.06.1994 FI 942750**

(43) Date of publication of application:
**13.12.1995 Bulletin 1995/50**

(73) Proprietor: **NOKIA TECHNOLOGY GmbH
75175 Pforzheim (DE)**

(72) Inventor: **Salonen, Jouni
FIN-33820 Tampere (FI)**

(56) References cited:
EP-A- 0 316 231          EP-A- 0 391 094
EP-A- 0 550 231          EP-A- 0 551 036
EP-A- 0 561 286          EP-A- 0 565 948
US-A- 4 985 764

**Description**

The invention relates to a method for detecting and encoding edges in an interlaced video signal. In the edge detection a window is employed in which operator responses are calculated in several directions.

When processing a received interlaced video signal digitalized into sampled data, the image processing application used is in most cases interpolation, peaking, noise suppression, or motion estimation. To obtain good results in any of these applications knowledge is needed about the edge direction in the image; in other words, an edge detection method is needed. Edge detection is of utmost importance in object detection. When one looks at an object one perceives it by looking at its edges and angles and their jaggedness and sharpness. Therefore, in image processing, it is important to identify the local image contents and process the image accordingly. Jaggedness, line breaking, and unsharpness of edge regions as well as blurring of details in the image, which are typical of known methods especially when using a fixed algorithm, are highly dependent of the direction of the edge region. Hence, the purpose of edge detection is to examine which is the correct interpolation direction, sharpening direction, etc. To find that out, one has to obtain reliable edge information about the surroundings of the pixel to be processed. When the direction has been found out, it is possible to choose a processing method suitable for that direction.

For example, edge adaptive interpolation can be used to convert an interlaced normal definition image (720*576/50/2:1) either to a non-interlaced image (720*576/50/1:1), an image with a doubled field frequency (720*576/100/2:1), or to an image with a doubled vertical and horizontal line rate (1440*1152/50/2:1). In all these conversions it is possible to use the same edge detection method.

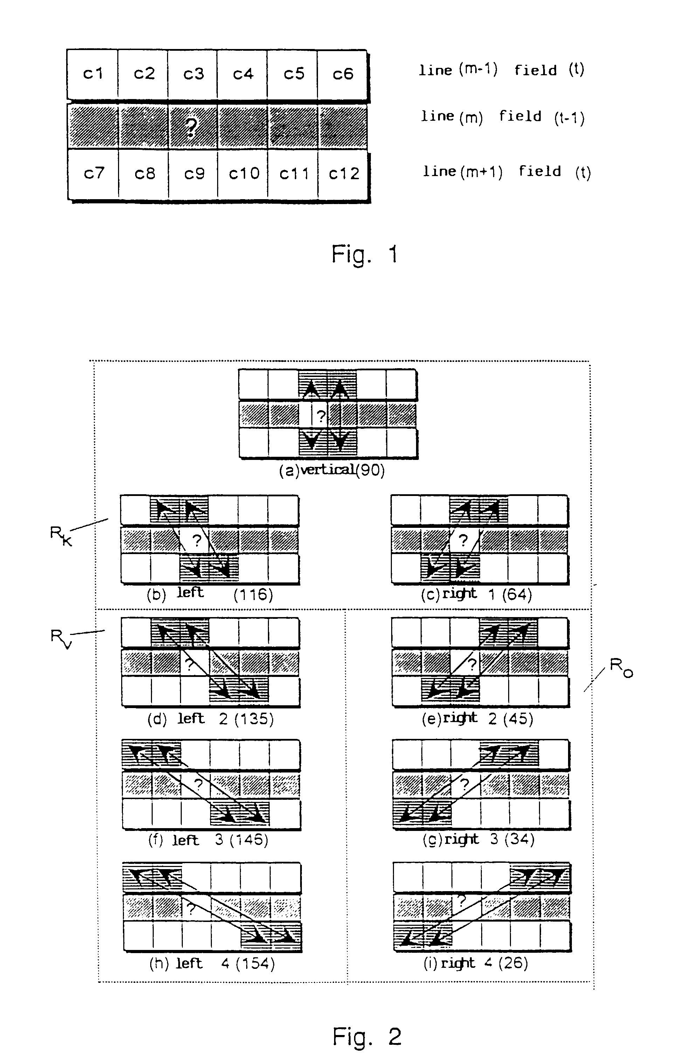

Finnish patent FI-89995 corresponding to EP-A-550231 presents an efficient edge detector operating in a 6*3 window, capable of detecting an edge in nine directions. The detection takes place inside a field. Figure 1 shows a 6*3 window used in the detection which comprises 6 adjacent pixels $c_1$, $c_2$, $c_3$, $c_4$, $c_5$ and $c_6$ on the line m-1 and, likewise, 6 adjacent pixels $c_7$, $c_8$, $c_9$, $c_{10}$, $c_{11}$ and $c_{12}$ on the next line m+1 of the same field t. By means of the pixels on these lines the value, marked with a question mark (?), of the edge estimate of the pixel on the line interpolated in between has to be calculated. Figures 2a...i show possible edge line directions and the pixel pairs taken into account in the calculation in each case. In Figure 2a it is examined whether the edge line is at an angle of 90 degrees; in Figures b, d, f and h, whether the line is inclined to the left in the direction of 116, 135, 146 and 154 degrees, and in Figures c, e, g and i, whether the line is inclined to the right in the direction of 26, 34, 45 and 64 degrees. These nine different cases are divided into three groups to be examined: the middle group Rk including the following directions to be examined: 64, 90 and 116 degrees (Figures a, b and c); the right group Ro including the following directions to be examined: 26, 34 and 45 degrees (Figures e, g and i); and the left group Rv including the following directions to be examined: 135, 146 and 154 degrees (Figures d, f and h). Each possible edge direction is examined by calculating with four pixels the sum of the absolute differences of the pixels. In Figure 2, the arrowheads at the ends of the continuous lines indicate the positions of the pixel pairs included in the calculation of the difference in each case. First, a response for each edge direction is calculated as follows:

middle group Rk:

$$\text{vertical} = |c_3 - c_9| + |c_4 - c_{10}|$$

$$\text{right1} = |c_3 - c_8| + |c_4 - c_9|$$

$$\text{left1} = |c_2 - c_9| + |c_3 - c_{10}|$$

left group:

$$\text{left2} = |c_2 - c_{10}| + |c_3 - c_{11}|$$

$$\text{left3} = |c_1 - c_{10}| + |c_2 - c_{11}|$$

$$\text{left4} = |c_1 - c_{11}| + |c_2 - c_{12}|$$

right group:

$$right2 = |c4 - c8| + |c5 - c9|$$

$$right3 = |c4 - c7| + |c5 - c8|$$

$$right4 = |c5 - c7| + |c6 - c8|$$

After all responses in 9 directions have been calculated group by group, the minimum response for each group is found out. When the minimum response of each group has been found out, the smallest of the minimum values is found out, the minimum of the minimums, which will be marked TOTmin.

When in the window of Figure 1, using the above formulas, in each group the value and direction of the group minimum have been calculated and it has been found out which group contains the TOTmin, these data are stored in memory as an estimate. So the value of the estimate of the pixel represented by a question mark consists of four pieces of information:

1) the direction of the minimum response of group Ro,
2) the direction of the minimum response of group Rv,
3) the direction of the minimum response of group Rk,
4) TOTmin, which indicates which group's minimum response is the smallest.

By sliding the window the estimate for the pixel on the right side of the pixel marked with a question mark is calculated, then the estimates for the pixels of the line to be interpolated next are calculated, until a sufficient amount of edge information from the neighbourhood of the interpolated pixel marked with a question mark has been stored in memory. On the basis of this edge information, ie. these estimates, the final edge information in the edge information correctness checking circuit is next selected, which circuit, by comparing the edge information to the edge information of the neighbouring pixels and using a suitable consistency check, decides whether the edge information is acceptable. After that, the image may be further processed in the direction indicated by the edge information.

The edge detection method described above, like other corresponding methods, is based on the assumption that the deviation of luminance values is low along an edge whereas across an edge the deviation is high. The deviation is measured as an absolute difference of luminance values. The edge information is obtained by calculating the absolute differences in the various directions and selecting the direction with the smallest response as edge direction. If edge detection is carried out in a noisy location or close to narrow lines, it is possible to obtain small responses in several directions, in which case it is difficult to find out the correct direction. It is a disadvantage of the method described above that it does not provide information about whether or not a certain point is an edge point, and another disadvantage is that it is not capable of detecting a horizontal edge. Therefore, determining the edge direction by examining a single location does not provide an entirely reliable picture of the edge direction.

It is an object of this invention to find an edge detection method which has the advantages of the method described above but which also makes it possible to detect the orientation of an edge in the horizontal direction. This goal is achieved according to the enclosed claims as follows: in the neighbourhood of the location examined the dominant edge direction is found out. Then a few direction candidates for each examined position in the field are assigned, and then the number of incorrect candidates is reduced on the basis of a suitable criterion in order to increase the probability for the correct direction. The probability is increased by

• using parallel difference calculation in each direction,
• processing various directions hierarchically by dividing the directions into main directions and subdirections
• calculating trial interpolation values and discarding one main direction that does not fit into its neighbourhood, and
• selecting the dominant direction in a neighbourhood.

The invention is described in more detail with reference to the enclosed diagrammatic drawings, where

Figure 1          is an edge detection mask in a known method,
Figure 2          illustrates operators in a known method,
Figure 3a         shows an edge detection mask in the method of the invention
Figure 3b         illustrates the memory arrangements in the forming of the mask of Figure 3a

Figure 4                        shows direction operators,

Figure 5                        is a coupling arrangement for calculating responses,

Figure 6                        is a coupling arrangement for calculating preliminary direction information

Figure 7                        illustrates the memory arrangement used in the consistency check,

Figures 8a and 8b               show the coupling for the use of direction information for determining the interpolation direction, and

Figure 9                        shows a coupling for improving consistency.

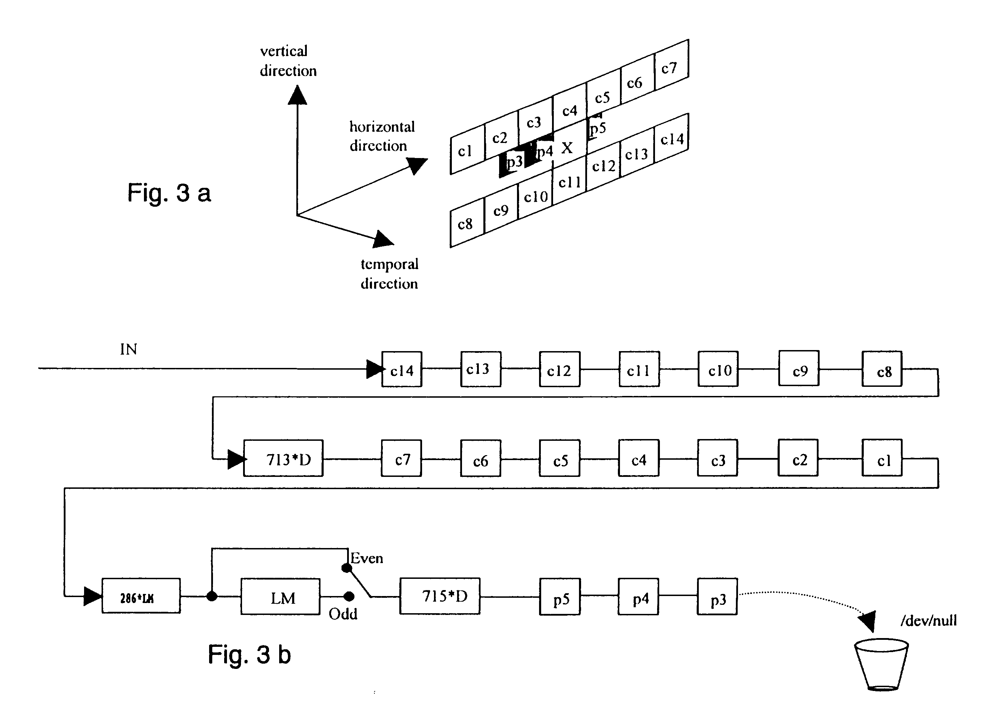

Figure 3a shows a window used in the detection. In this example, the window is the size of 7*3 but any n*3 window can be used. The top row of the window consists of 7 adjacent pixels $c_1$, $c_2$, $c_3$, $c_4$, $c_5$, $c_6$ and $c_7$ from the line m-1 and, likewise, 7 adjacent pixels $c_8$, $c_9$, $c_{10}$, $c_{11}$, $c_{12}$, $c_{13}$ and $c_{14}$ from the next line m+1 of the same field t. Using the pixels of these lines the value of the edge estimate, marked with X, has to be calculated. This estimate can be thought of as e.g. the edge information of the pixel on the line interpolated in between.

Since the calculation of the direction estimate is an intra-field process, it uses only pixels $c_1$, ..., $c_{14}$ of field t, in other words, the top and bottom row of the window are used. In practice, the creation of new samples according to the edge information is performed simultaneously with the edge detection. If the algorithm exploiting the edge detection, say, interpolation, is an inter-field process, then pixels $p_3$, $p_4$ and $p_5$ are also brought into the window from the preceding field t-1. Let it be pointed out that these pixels are not used in the edge detection itself, but the edge detection is purely an intra-field process.

Figure 3b illustrates the memory arrangement for forming the calculation window. It is intended for a case where the video signal complies to the PAL system and the active sample space is 720*576. If the number of digitized samples differs from the above, the size of the line and field memories is of course different. The arrangement simply comprises successive pixel memories $c_1$, $c_2$, $c_3$, $c_4$, $c_5$, $c_6$, $c_7$ and $c_8$, $c_9$, $c_{10}$, $c_{11}$, $c_{12}$, $c_{13}$ and $c_{14}$, and a delay between these two groups of seven pixels, which corresponds to the line duration minus the width of the window, or in this case delayed for 713 pixel delays. The delay is marked 713*D. The top and bottom rows of the window are obtained from the outputs of the pixel memories. Then follows the field memory (286LM) consisting of 286 line delays. If the line of the preceding field in the window is even-numbered, it is obtained from the output of the field memory delayed by the time that corresponds to 715 pixel memories (715*D), and if it is odd, it is obtained from the output of the field memory delayed by one line and in said 715 pixel memories. Selection is performed with a controlled switch as shown in the figure. The samples of the middle row in the window, ie. those of the preceding field, are obtained from the outputs of pixel memories $p_5$, $p_4$ and $p_3$. On the basis of the figure, the forming of the window is clear to a person skilled in the art. The video signal samples arrive in block C14, travel through all successive memories and leave at pixel memory $p_3$, which thus yields the temporally oldest sample. Let it be pointed out that the samples $p_3$, $p_4$ and $p_5$ of the preceding field are needed only if the image is converted from normal definition raster to high definition raster or from interlaced to progressive (IPC). In the latter case, the conversion is done so that the intermediate sample for the 3-point median filter is taken from the preceding field. Therefore a field memory is needed. If the conversion were field rate upconversion (FRU), then two field memories would be needed. In the edge direction estimation it suffices to have the pixel memories and one line memory between them.

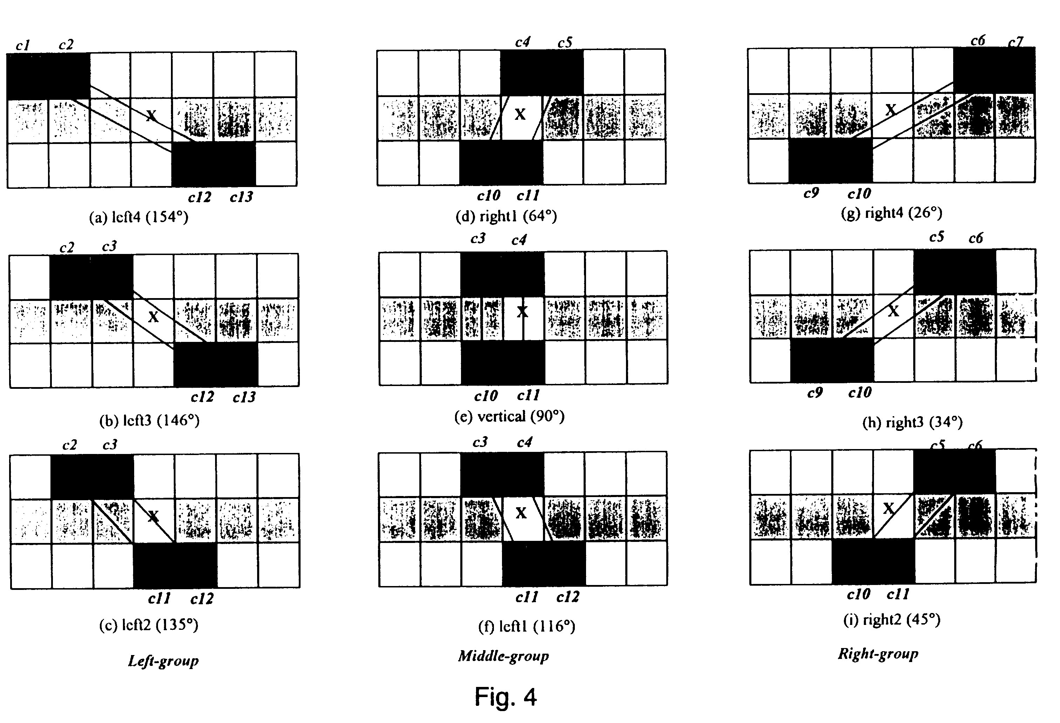

For each examined sample X in a field a local direction is calculated using nine direction operators inside the window, shown in Figures 4a...4i. In each Figure there are two arrows next to each other. For both arrows, the difference of the absolute values of the current pixels indicated by the arrowheads in the window is first calculated, and then the sum of the differences is calculated. This is done in all nine directions. E.g. in Figure 4a marked left4 (154°) the marking left4 means that this is the fourth operator in the group where there are 4 operator pairs inclined to the left, and the degree shows the amount of inclination. In this figure, the sum of the absolute differences, ie. the operator response left4 is $|c_1 - c_{12}| + |c_2 - c_{13}|$. The sum of the absolute differences is calculated in the same manner in all nine directions and the sums are stored in memories for further processing. The operators are divided into three groups: the left group comprising operators left2, left3 and left4; the middle group comprising operators right1, vertical and left1; and the right group comprising operators right2, right3 and right4. The mathematical expressions for the sums of the differences in all directions, divided into groups mentioned above, are as follows:

middle group:

$$vertical = |c_3 - c_{10}| + |c_4 - c_{11}|$$

$$right1 = |c_4 - c_{10}| + |c_5 - c_{11}|$$

$$left1 = |c3 - c11| + |c4 - c12|$$

left group:

$$left2 = |c2 - c11| + |c3 - c12|$$

$$left3 = |c2 - c12| + |c3 - c13|$$

$$left4 = |c1 - c12| + |c2 - c13|$$

right group:

$$right2 = |c5 - c10| + |c6 - c11|$$

$$right3 = |c5 - c9| + |c6 - c10|$$

$$right4 = |c6 - c9| + |c7 - c10|$$

In addition to these nine directions, the response for the horizontal direction operator is calculated as follows: horizontal = I c4 - c11 I - range(c3, c4, c5) - range(c10, c11, c12), where "range" means the difference of the maximum and minimum of the input samples.

The horizontal direction response is based on the same assumption that is used for the other directions: the deviation of sample values is low along an edge whereas across an edge the deviation is high. Thus, it is calculated maximum(c3, c4, c5) - minimum(c3, c4, c5) and maximum(c10, c11, c12) - minimum(c10, c11, c12). The sum of these two is then subtracted from the absolute difference of the two vertically aligned samples c4, c11, thus yielding the horizontal response as a result. Therefore, the greater the vertical difference and the smaller the horizontal difference, the greater the horizontal response and, thus, the probability for there being a horizontal edge in that location of the image. This information can be used in further processing of the image, e.g. by forcing the interpolation horizontal instead of directions, say, left4 or right4. This is especially beneficial with images containing text, where extreme directions (horizontal/vertical) tend to deteriorate the signal. By setting a high enough threshold for the horizontal operator it can be made more certain that there really is a horizontal edge.

Of course, the horizontal operator may be different from the one described above. The essential thing is that it is based on the comparison of responses of vertical and horizontal directions.

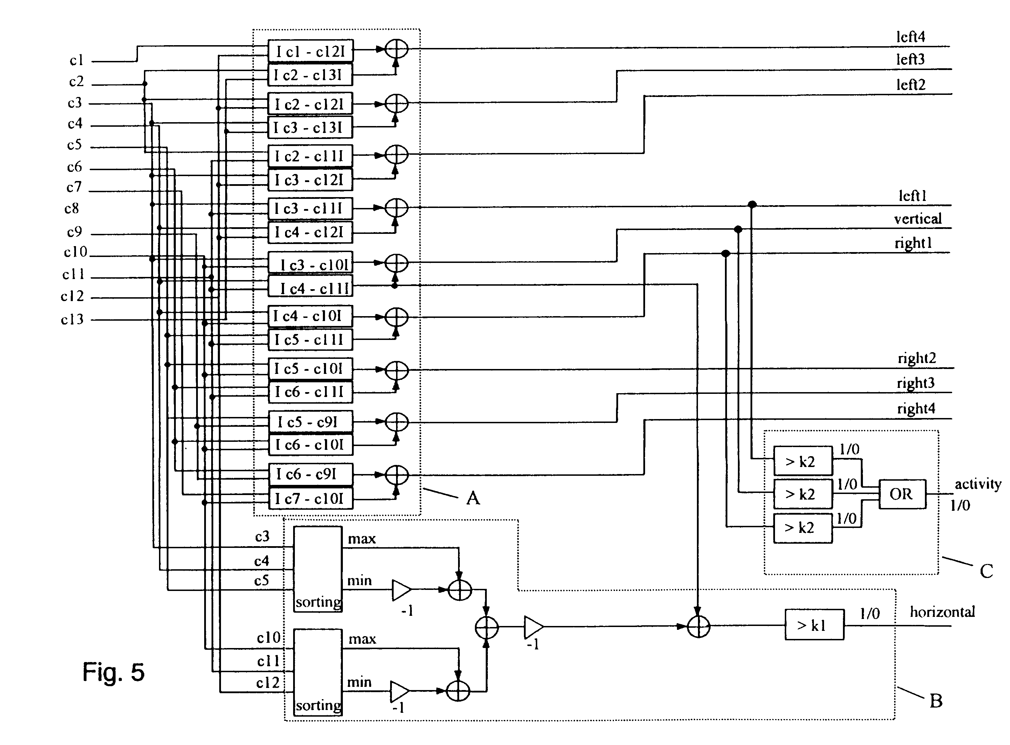

The above-mentioned responses in nine directions and the horizontal response are calculated with a coupling arrangement shown in Figure 5. Its inputs are the samples c1, ..., c13 of the top and bottom rows of the window. Block A comprises calculation means to calculate eighteen absolute differences simultaneously and to sum the sums of the differences in pairs. Inside each calculation part there is marked the calculating operation it performs. The operator responses are obtained from the output of block A. The horizontal operator response is calculated in block B. The groups of three samples c3, c4, c5 and c10, c11, c12 are arranged in the order of magnitude of the samples in the sorting blocks and the differences of maximum and minimum of the sample values of the blocks are calculated and then summed and the sign of the sum is changed to the opposite. The difference of the sample values c4-c11 is added to the negative sum and the result is thresholded with the number k1, thus yielding the horizontal operator response. The threshold value can be freely selected, a suitable value could be k1 = 128.

When selecting the final edge direction in the consistency check discussed later, it has proved advantageous to perform this check adaptive to the number of relevant edge information. This means that when determining the final edge direction, the edge information associated with the active positions is only considered. Activity is determined on the basis of the middle group information so that if at least one response in this group is greater than the set threshold value k2, which could be e.g. 16, then the image position is active and the direction information will be taken into account in the consistency check. The check is performed in a simple manner in block C with an OR operator having as its inputs the thresholded responses of the middle group. The activity information "active/inactive" is obtained from the output. Hence, if any one of the middle group responses fed to the input exceeds the set threshold value k2, the position in question is considered "active".

The activity check can also be done in a way different from the one described above. For example, it is possible to examine the absolute difference of two samples or the difference of the maximum and minimum in a group of three samples. Then the position is considered active if

abs(c4-c11) > k2, or

[max(c3,c4,c5) - min(c3,c4,c5)] > k2, or

[max(c10,c11,c12) - minmin(c10,c11,c12) )] > k2

k2 is a selectable threshold value which could be 16, for example.

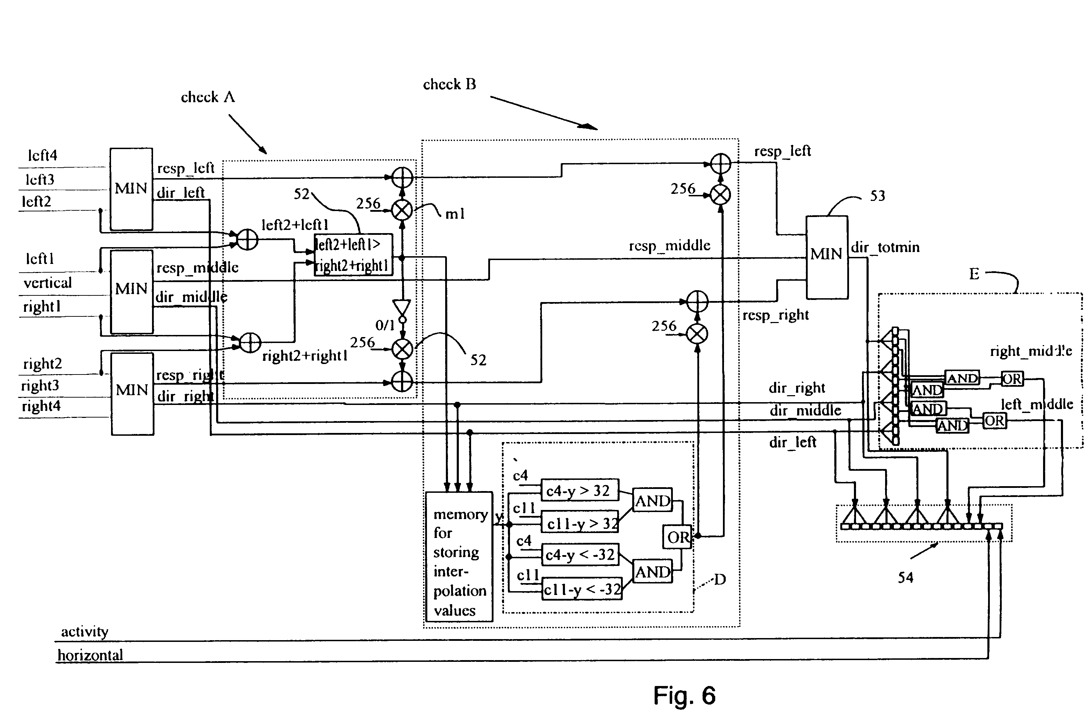

As the responses, activity, and thresholded horizontal response have been calculated, they are ready to be stored in memory. The responses are further processed according to Figure 6 both in the main and subdirections so that the responses left2, left3 and left4 of the left group comprise the left main direction, the responses left1, vertical and right1of middle group Rk comprise the middle main direction, and the responses right2, right3 and right4 of the right group comprise the right main direction. The responses of each main direction are taken to the appropriate block MIN, which finds out the minimum response among the input responses. Thus the minimum responses and their directions (= one of the three subdirections of a main direction) are obtained in each main direction. Before sorting in the blocks MIN the input responses have to be labelled somehow so that they can be distinguished after sorting. The responses can be labelled e.g. in the following manner: a three-bit field is reserved for each main direction and bit "1" is used to indicate the subdirection.

After the operations performed in blocks MIN both the minimum response and the corresponding subdirection are available for each main direction; in Figure 6 e.g. resp_left and dir_left denote the minimum response and corresponding subdirection in the left main direction. Resp_left could be e.g. the response (numerical value) of the operator left3, in which case dir_left would be 146°. The other blocks have corresponding markings.

When the minimum responses and corresponding subdirections have been calculated, it is next found out which of them are unsuitable. There are several ways to determine and mark unsuitable directions. In this invention two separate check routines are used which will be called Check A and Check B. Still referring to Figure 6.

In the Check A block two successive operator responses are taken immediately to the right and to the left of the vertical direction, ie. response pairs right1, right2 and left1, left2. The response pairs are summed and the sums of the pairs are compared in the comparison block 52, which determines the probable/improbable main directions. If (left2 + left1) > (right1 + right2), ie. the sum of the response pair of the right direction is smaller, then the probability of the edge direction is greater in the right direction. The block output is then 1 and the discarding of the more improbable left main direction is done by adding a certain large constant, say, 256, to the corresponding minimum response resp_left, thus making the minimum response large and preventing it from proceeding to the interpolation, which occurs later. The preventing is done as follows: output 1 of the comparison block 52 is taken to a multiplier m1, the other input of which is the value 256. Then the output of the multiplier is 256, which will be summed with the minimum response of the left direction. The minimum response of the right direction remains unchanged since said value 1 is inverted before the multiplier m2. If the comparison block outputs a "0", the process is inverse to the above. So, Check A always manipulates the minimum response either in the left or in the right direction and makes it useless by changing its value into the biggest possible.

After block A, we have the minimum responses in all three main directions and, in addition, the subdirection information is associated to the minimum response. The response direction information from the left and right groups, ie. the direction information dir_left and dir_right are stored in memory 51 as is also the information on the correctness probability of these directions calculated in the comparison block 52.

Then a trial interpolation is performed in block B (Check B), using the subdirections (dir_left or dir_right) stored in memory 51 and calculated in connection with the search for the minimum response of the right and the left main direction. This stage requires precalculated interpolation values for at least the left and the right group. In practice, however, it is the most straightforward method to calculate all possible values and store them in the memory 51 (9 memory locations) and then select one of them by means of three control signals: the subdirections dir_left, dir_right mentioned above and the one of those two that was used. Then the trial interpolation value y is compared to the sample c4 above and sample c11 below the zero sample X. This is done by calculating the difference of these samples and the trial value y. If the difference falls outside a preset range, in our example the range [-32,32], the remaining extreme main direction (dir_left or dir_right) is considered definitely wrong and, therefore, it is discarded by adding the value 256 to its response. It is necessary to add this value only to the remaining extreme main direction, but it can be added to both of the extreme responses, as shown in Figure 6. The check described above is done in sub-block D with simple AND and OR operations. Of course, it is possible to implement block D in other ways, too, and yet obtain the same result.

The next stage is to find the smallest of the main direction minimum responses (dir_totmin). The search is done in block 53 (Figure 6), where the minimum responses resp_left, resp_right and resp_middle of the three main directions, which are the block's inputs, are arranged in the order of magnitude, and the smallest of them, marked with dir_totmin, is chosen for the output. It can be marked with a three-bit code word.

Block E is optional. If the angle is e.g. between 45° and 64°, ie. between two groups (middle and right), there will appear a small "coupling error" in the image. Therefore, it is possible to add block E producing "intermediate groups" right_middle and left_middle. These operate in connection with the search for dominant direction in a way corresponding to that of the main groups. By means of AND and OR operations performed in block E it is examined whether dir_totmin belongs to the intermediate groups or not. The AND operation compares the dir_totmin value to the dir_right, dir_middle and dir_left values, ie. the following logic AND operations are performed:

(a) dir_totmin AND dir_right
(b) dir_totmin AND dir_middle
(c) dir_totmin AND dir_left.

After that, in the OR operations, (a) OR (b) is performed, the result of which is right_middle, and (c) OR (b) is performed, the result of which is left_middle. The result right_middle or left_middle is "1" if the minimum response of the group left_middle is left1 or left2 or, correspondingly, if the minimum response of the group right_middle is right1 or right2. In other words, if the value of the right_middle bit is "1", it means that either rightl or right2 gives the minimum response in the whole lot. After this phase, the responses are no longer needed. With the measures taken so far it has been found out

a) in which of the three main groups the absolute minimum response (= dir_totmin) is,
b) in which direction the minimum response (= dir_left dir_middle, dir_right) of each main group is, and
c) the optional information (left_middle) about whether the absolute minimum response is in the direction of the groups left1 and left2, and the optional information (right_middle) about whether the absolute minimum response is in the direction of the groups right1 and right2.

All this information is stored in memory for the consistency check. The memory may be a 16-bit memory unit 54. Also the activity information calculated previously and the horizontal response are stored in the memory.

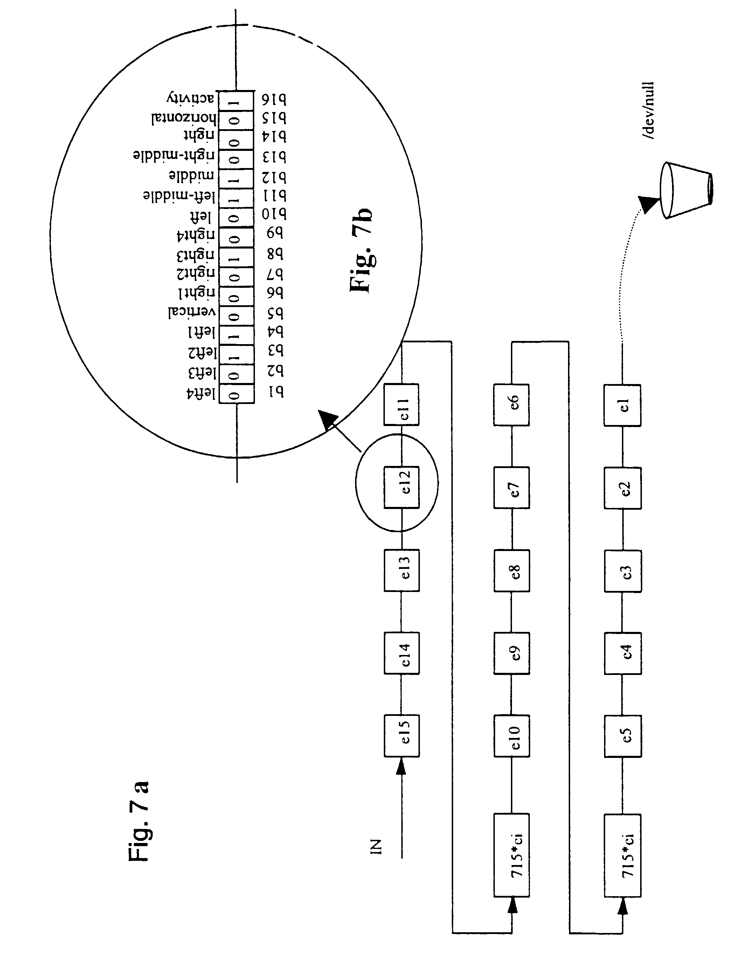

Figure 7a shows a possible memory configuration used in the consistency check. In the consistency check the edge information of the sample examined, stored in the memory unit 54, is compared to the corresponding edge information of neighbouring samples. The window used in the check is here a 5*3 window, so it comprises fifteen 16-bit memory units e1, e2, ..., e15 described above, each of which contains the edge information associated with the pixel. A bit of information in a unit is represented in the true/false fashion with one bit. This approach does not optimize the memory size needed but makes encoding very feasible. The size requirement for the memory used in the consistency check is about 2x720x16 bits. Since there is in the window edge information from three successive lines, two line memories are also needed, both comprising 715 pixel delays. In Figure 7b there is a magnified illustration of the configuration of one memory unit, in this case e12. It is a 16-bit memory comprising bit locations b1, b2, ..., b16. Above each bit location the meaning of the location is explained, and the information is represented by a 0 or 1 bit (false/true principle). If, for example, the check illustrated in Figure 6 has yielded the information dir_left=left2, dir_middle=left1, dir_right=right3, dir_totmin=left middle/middle, active, then the bits in the memory locations are as shown in the figure.

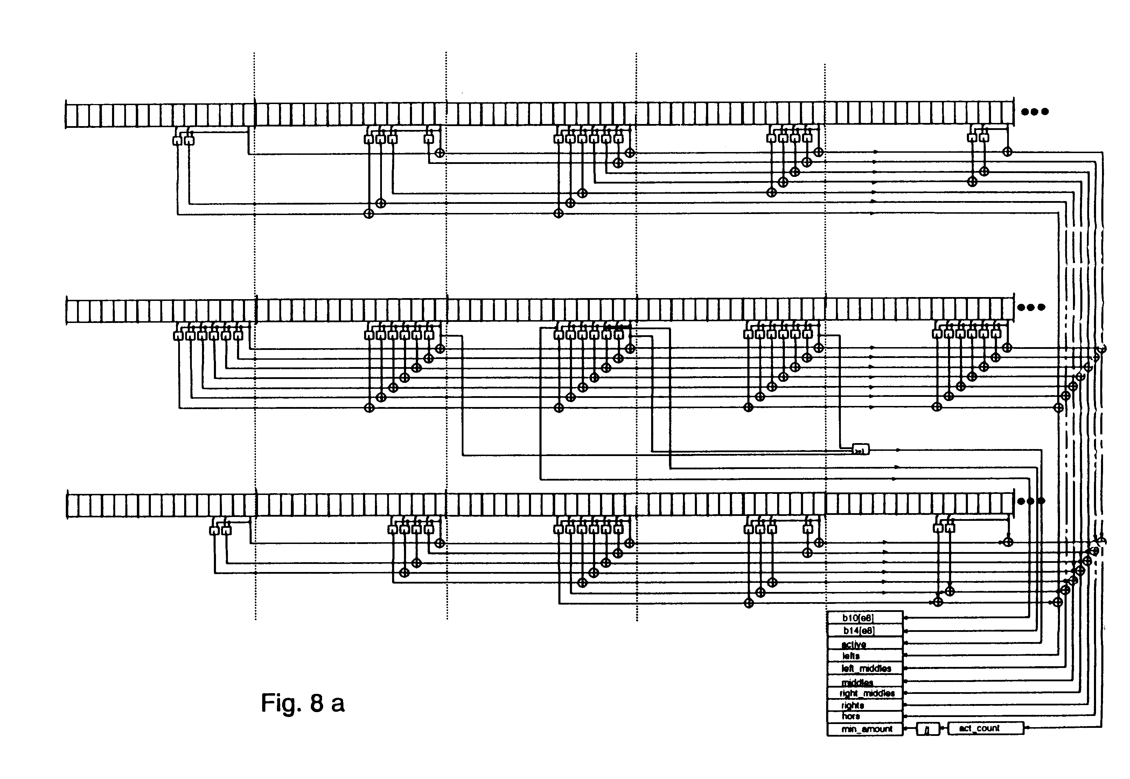

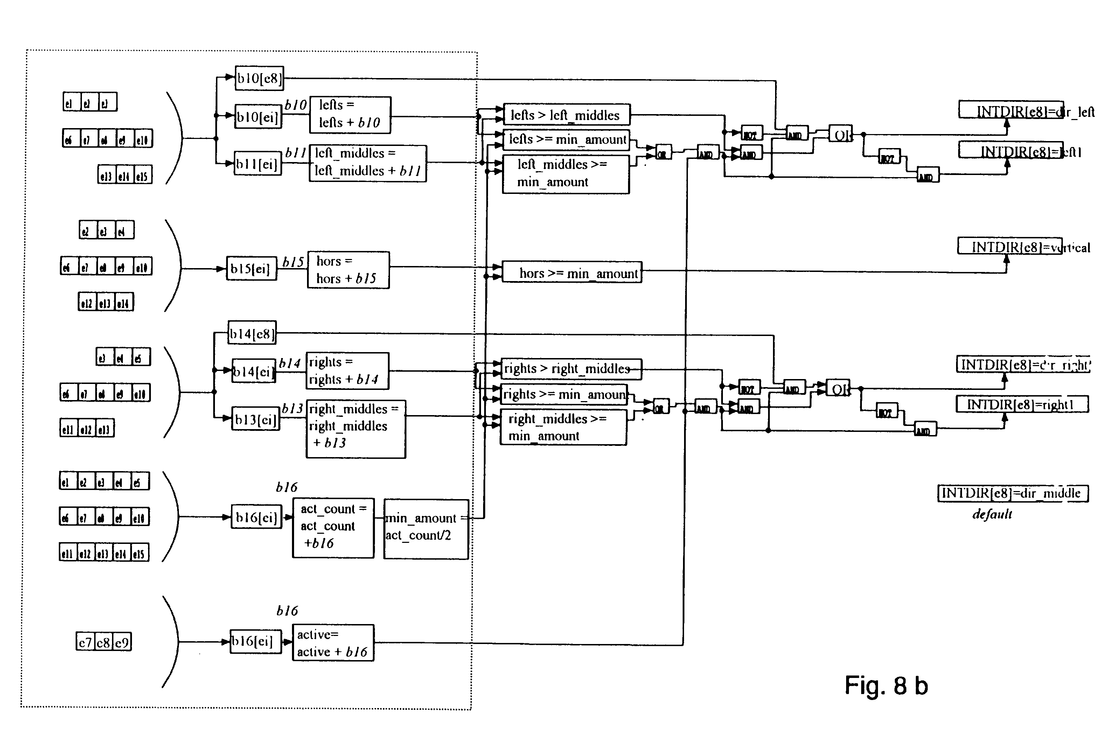

Figures 8a and 8b show how the preliminary direction information is used for determining the interpolation direction in the consistency check. In the check a window is used the size of which can be freely chosen. In this example the size of the window is 5*3. With the window size selection it is possible to slightly weigh the direction in which the edge direction will most likely be. The basic idea here is to find a dominant direction in a 5*3 window by counting the number of main directions, which are left, middle, right and horizontal. If the optional block E shown in Figure 6 is used, then there are also the intermediate directions left_middle and right_middle. It should be noted that calculations are not performed symmetrically in all fifteen positions, but only 11 directions are taken into account in the counting. For example, when counting the number of the left main direction, the edge information e1, e2, e3, e6, e7, e8, e9, e10, e13, e14 and e15 are taken into account. In order to be valid the edge position must be active (there is no need for a special activity bit, but it can be coded so that zeros in all directions mean inactive). The total number of active positions within the 5x3 region is calculated (act count) and half of the act count specifies the minimum amount required for a main direction to be a dominant direction.

When the main direction in the neighbourhood of sample e8 is known, then the subdirection of the main direction in this position is set as the interpolation direction. The default interpolation direction is the subdirection (dir_middle) of the middle main direction.

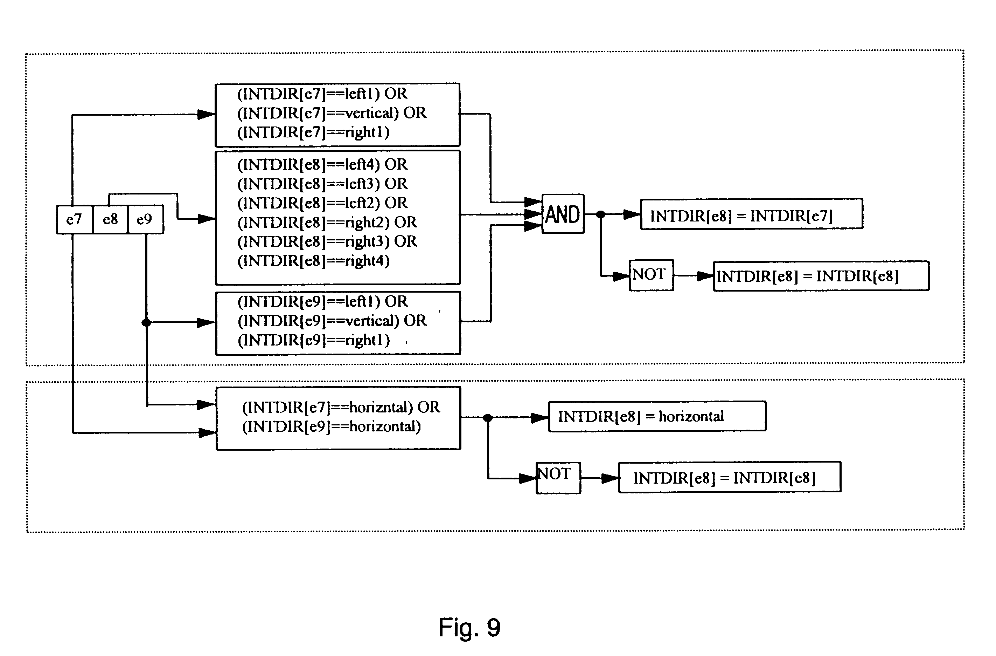

In principle, the interpolation direction is now known. However, to reduce coupling errors the consistency of the interpolation direction can be further improved as shown in Figure 9. Three successive positions in a line are considered to determine the required final interpolation direction for the position e8. If the interpolation direction in the position e8 has been selected from either the left or the right main direction and if both e7 and e9 have been selected from the middle interpolation direction, then the selected direction in e8 is not consistent and it has to be changed. In this case, the direction of the position e7 is used.

With the above-described measures according to the invention the edge direction for each sample of an interlaced video signal has been reliably found out. This edge information can be used in many ways when processing the image. If an interlaced video signal complying with the 625/2:1/50 Hz standard is converted into a progressive 625/1:1/50 Hz signal or into a 625/2:1/100 Hz signal with a doubled field frequency or into a 1250/2:1/50 Hz signal, then new lines have to be interpolated. There are grounds for performing the line pixel interpolation adaptively on the basis of the edge information. Then a suitable interpolator would be e.g. an interpolator similar to the one shown in Figure 9 of the Finnish patent no. 89995. This interpolator uses samples p3, p4 and p5 from the preceding field, see Figure 3a in this application. Figure 10 is a diagrammatic illustration of an FMH-type interpolator of said patent application, adapted to this invention. There the averages for the input sample pairs in two-point linear filters are first calculated, and these serve as inputs for three-point median filters. There are nine of those, corresponding to nine directions, thus making the interpolation occur in the direction determined by the edge information.

There is a certain trade-off in directional interpolation: on one hand, if the direction is correctly estimated, the interpolation result is good, but, on the other hand, if the estimation is erroneous, the interpolation causes visible image errors. The image errors are typically the more visible the more there are direction-based errors in the estimation. Simulations have clearly shown that directional interpolation in the extreme directions, such as left4, left3, right3 or right4, produces visible image errors. If the direction has been erroneously estimated to be one of those, the result is that samples that are not situated in the immediate neighbourhood of the zero sample X affect considerably the value of the zero sample when it is calculated, and this makes errors visible in the image.

## Claims

1.  A method for detecting an edge and edge direction in an interlaced video signal received in the form of sampled data, in which method for each position (X) examined:

    -   a detection mask is used, the top row of which comprises samples from a line (m) and the bottom row comprises samples of the corresponding horizontal positions from the next line (m+1) of the same field,
    -   several operator responses are calculated that function in different subdirections with respect to the examined position (X) in the center of the mask,
    -   said operator responses in the subdirections are arranged in main groups according to the main directions, namely a middle group, a left group and a right group, and for each main group a minimum response (resp_left, resp_middle, resp_right) and its subdirection (dir_left, dir_middle,dir_right), are found out and stored in a memory,
    -   the minimum of the minimum responses and the main direction (dir_totmin) of its main group is found out and is stored in a memory,
    -   a consistency check is performed, in which the dominant main direction of an edge is searched using the main and subdirection information of the examined position (X) and its neighbouring positions stored in the memory,

    **characterized** in that:

    -   the operators also include a horizontal operator (horizontal), which compares the difference of samples in the vertical direction to the difference of samples in the horizontal direction, and the greater the difference in the vertical direction and the smaller the difference in the horizontal direction, the greater the probability that there is a horizontal edge, and that
    -   for the examined position (X) its activity is determined, a position being active when any one of the responses of the middle group operators is greater than a set first threshold value, and only positions considered active are taken into account in the consistency check, and that
    -   the subdirection of the minimum response of the main direction group of the examined position, determined in said consistency check, is selected as final edge direction.

2.  The method of claim 1, **characterized** in that the operators, divided into main groups, are:

    <u>middle group</u>

    $$\text{vertical} = |c3 - c10| + |c4 - c11|$$

$$right1 = |c4 - c10| + |c5 - c11|$$

$$left1 = |c3 - c11| + |c4 - c12|$$

left group:

$$left2 = |c2 - c11| + |c3 - c12|$$

$$left3 = |c2 - c12| + |c3 - c13|$$

$$left4 = |c1 - c12| + |c2 - c13|$$

right group:

$$right2 = |c5 - c10| + |c6 - c11|$$

$$right3 = |c5 - c9| + |c6 - c10|$$

$$right4 = |c6 - c9| + |c7 - c10|$$

where $c1$, $c2$, $c3$, $c4$, $c5$, $c6$ and $c7$ are the samples on the top row of the mask and, correspondingly, $c8$, $c9$, $c10$, $c11$, $c12$, $c13$ and $c14$ are the samples on the bottom row of the mask.

3. The method of claim 2, **characterized** in that the horizontal operator is:

$$horizontal = |c4 - c11| - [(max(c3,c4,c5) - min(c3,c4,c5)) + (max(c10,c11,c12) - min(c10,c11,c12))].$$

4. The method of claim 3, **characterized** in that when the horizontal operator exceeds a set second threshold value, there is considered to be a horizontal edge.

5. The method of claim 1, **characterized** in that checks will be performed on the basis of which at least one of the main directions is discarded as unsuitable.

6. The method of claims 2 and 5, **characterized** in that in the first check (Check A) the sum of the responses of operators left2 and left1 is compared with the sum of the responses of operators right2 and right1, and if the former is greater than the latter, the minimum response of the left main direction is discarded, and in the opposite case the minimum response of the right main direction is discarded.

7. The method of claim 6, **characterized** in that in the second check (Check B):

   - a trial interpolation is performed in the direction indicated by the subdirection information of the minimum response of the remaining main group,
   - the trial interpolated value (y) is compared to the sample above and below the examined position (X), and if the difference falls outside a set range, also the minimum response of the remaining main direction is discarded.

8. The method of any one of the preceding claims, **characterized** in that the consistency check is performed in a window, the size of which has been selected, and to each memory position (em) of the window the information on the subdirection of the minimum responses of the main groups (dir_left, dir_middle, dir_right) is associated, the information on the minimum of the minimum responses of the main groups (dir_totmin), the activity information (activity), the horizontal response information (horizontal) and the information on whether the direction of the minimum of the minimum responses of the main groups (dir_totmin) is in a certain direction.

9. The method of claim 8, **characterized** in that in the window the number of active positions is calculated and how many of each main direction there are, and in order for the main direction with the greatest number to be the dominant main direction said number has to be sufficient, e.g. at least half the number of active positions.

**Patentansprüche**

1. Verfahren zum Erfassen einer Flanke und einer Flankenrichtung in einem Bildsignal mit Zeilensprungverfahren, das in der Form von abgetasteten Daten empfangen wurde, wobei in dem Verfahren für jede untersuchte Position (X):

   - eine Erkennungsmaske benutzt wird, deren oberste Zeile Proben von einer Zeile (m) und die unterste Zeile Proben der entsprechenden horizontalen Positionen von der nächsten Zeile (m+1) desselben Feldes umfaßt,
   - mehrere Operatorreaktionen errechnet werden, die in verschiedenen Nebenrichtungen in bezug auf die untersuchte Position (X) in der Mitte der Maske wirken,
   - die genannten Operatorreaktionen in den Nebenrichtungen zu Hauptgruppen gemäß den Hauptrichtungen angeordnet werden, nämlich eine mittlere Gruppe, eine linke Gruppe und eine rechte Gruppe, und für jede Hauptgruppe eine Mindestreaktion (resp_left, resp_middle, resp_right) und ihre Nebenrichtung (dir_left, dir_middle, dir_right) ermittelt und gespeichert werden,
   - das Minimum der Mindestreaktionen und die Hauptrichtung (dir_totmin) ihrer Hauptgruppe ermittelt und gespeichert werden,
   - eine Plausibilitätsprüfung durchgeführt wird, bei der die dominante Hauptrichtung einer Flanke mit den Haupt- und Nebenrichtungsinformationen der untersuchten Position (X) und ihrer gespeicherten Nachbarpositionen gesucht wird, dadurch gekennzeichnet, daß
   - die Operatoren auch einen horizontalen Operator (horizontal) beinhalten, der die Differenz von Proben in der vertikalen Richtung mit der Differenz von Proben in der horizontalen Richtung vergleicht, und je größer die Differenz in der vertikalen Richtung und je kleiner die Differenz in der horizontalen Richtung ist, desto größer ist die Wahrscheinlichkeit, daß es eine horizontale Flanke gibt, und daß
   - für die untersuchte Position (X) die Aktivität ermittelt wird, wobei eine Position dann aktiv ist, wenn eine der Reaktionen der Operatoren der mittleren Gruppe größer ist als ein eingestellter erster Schwellenwert, und nur als aktiv angesehene Positionen bei der Plausibilitätsprüfung berücksichtigt werden, und daß
   - die Nebenrichtung der Mindestreaktion der Hauptrichtungsgruppe der untersuchten Position, in der genannten Plausibilitätsprüfung ermittelt, als endgültige Flankenrichtung ausgewählt wird.

2. Verfahren nach Anspruch 1, dadurch gekennzeichnet, daß die Operatoren, unterteilt in Hauptgruppen, wie folgt lauten:

   mittlere Gruppe:

   $$\text{vertical} = |c3 - c10| + |c4 - c11|$$

   $$\text{right1} = |c4 - c10| + |c5 - c11|$$

   $$\text{left1} = |c3 - c11| + |c4 - c12|$$

   linke Gruppe:

   $$\text{left2} = |c2 - c11| + |c3 - c12|$$

   $$\text{left3} = |c2 - c12| + |c3 - c13|$$

$$left4 = |c1 - c12| + |c2 - c13|$$

rechte Gruppe:

$$right2 = |c5 - c10| + |c6 - c11|$$

$$right3 = |c5 - c9| + |c6 - c10|$$

$$right4 = |c6 - c9| + |c7 - c10|$$

wobei c1, c2, c3, c4, c5, c6 und c7 die Proben in der obersten Zeile der Maske und dementsprechend c8, c9, c10, c11, c12, c13 und c14 die Proben in der untersten Zeile der Maske sind.

3. Verfahren nach Anspruch 2, dadurch gekennzeichnet, daß der horizontale Operator wie folgt lautet:

$$horizontal = |c4 - c11| - [(max(c3,c4,c5) - min(c3,c4,c5)) + (max(c10,c11,c12) - min(c10,c11,c12))].$$

4. Verfahren nach Anspruch 3, dadurch gekennzeichnet, daß, wenn der horizontale Operator einen eingestellten zweiten Schwellenwert überschreitet, angenommen wird, daß es eine horizontale Flanke gibt.

5. Verfahren nach Anspruch 1, dadurch gekennzeichnet, daß Prüfungen durchgeführt werden, auf deren Basis wenigstens eine der Hauptrichtungen als ungeeignet verworfen wird.

6. Verfahren nach den Ansprüchen 2 und 5, dadurch gekennzeichnet, daß in der ersten Prüfung (Check A) die Summe der Reaktionen der Operatoren left2 und left1 mit der Summe der Reaktionen der Operatoren right2 und right1 verglichen wird, und wenn die erstere größer ist als die letztere, dann wird die Mindestreaktion der linken Hauptrichtung verworfen, und im entgegengesetzten Fall wird die Mindestreaktion der rechten Hauptrichtung verworfen.

7. Verfahren nach Anspruch 6, dadurch gekennzeichnet, daß in der zweiten Prüfung (Check B):

   - eine Versuchsinterpolation in der Richtung durchgeführt wird, die durch die Nebenrichtungsinformation der Mindestreaktion der verbleibenden Hauptgruppe angezeigt wird,
   - der Versuchsinterpolationswert (y) mit der Probe über und unter der untersuchten Position (X) verglichen wird, und, wenn die Differenz nicht in einen eingestellten Bereich fällt, auch die Mindestreaktion der verbleibenden Hauptrichtung verworfen wird.

8. Verfahren nach einem der vorherigen Ansprüche, dadurch gekennzeichnet, daß die Plausibilitätsprüfung in einem Fenster durchgeführt wird, dessen Größe gewählt wurde, und jeder Speicherposition (em) des Fensters die Information über die Nebenrichtung der Mindestreaktionen der Hauptgruppen (dir_left, dir_middle, dir_right), die Information über das Minimum der Mindestreaktionen der Hauptgruppen (dir_totmin), die Aktivitätsinformation (activity), die horizontale Reaktionsinformation (horizontal) und die Information darüber zugewiesen wird, ob das Minimum der Mindestreaktionen der Hauptgruppen (dir_totmin) in einer bestimmten Richtung liegt.

9. Verfahren nach Anspruch 8, dadurch gekennzeichnet, daß in dem Fenster die Anzahl aktiver Positionen und die Häufigkeit jeder Hauptrichtung berechnet wird, und damit die Hauptrichtung mit der größten Zahl die dominante Hauptrichtung sein kann, muß die genannte Zahl ausreichend sein, das heißt, wenigstens die Hälfte der Zahl der aktiven Positionen betragen.

**Revendications**

1. Procédé pour détecter un flanc et une direction du flanc dans un signal vidéo entrelacé reçu sous la forme de données échantillonnées, dans lequel pour chaque position (X) examinée :

- un masque de détection est utilisé, dont la rangée supérieure comprend des échantillons provenant d'une ligne (m) et la rangée inférieure comprend des échantillons des positions horizontales correspondantes provenant de la ligne suivante (m+1) du même champ,
- plusieurs réponses d'opérateurs sont calculées, qui fonctionnent dans différentes sous-directions relativement à la position examinée (X) au centre du masque,
- lesdites réponses d'opérateurs dans les sous-directions sont arrangées en groupes principaux selon les directions principales, c'est-à-dire un groupe milieu, un groupe gauche et un groupe droit, et pour chaque groupe principal une réponse minimale (resp_left, resp_middle, resp_right) et sa sous-direction (dir_left, dir_middle, dir_right) sont trouvées et stockées dans une mémoire,
- le minimum des réponses minimum des directions principales des groupes principaux (dir_totmin) est trouvé et est stocké dans une mémoire,
- un contrôle de cohérence est effectué, dans lequel la direction principale dominante d'un bord est recherchée en utilisant les informations de directions principales et de sous-directions de la position examinée (X) et de ses positions voisines stockées dans la mémoire,

  caractérisé en ce que :

-- les opérateurs comprennent aussi un opérateur horizontal (horizontal), qui compare la différence d'échantillons dans la direction verticale à la différence d'échantillons dans la direction horizontale, et plus la différence dans la direction verticale est grande et plus la différence dans la direction horizontale est petite, plus la probabilité qu'il existe un flanc horizontal est grande,
-- pour la position examinée (X), son activité est déterminée, une position étant active lorsque n'importe laquelle des réponses des opérateurs du groupe milieu est supérieure à une première valeur définie de seuil, et seules des positions considérées actives sont prises en compte dans le contrôle de cohérence, et
-- la sous-direction de la réponse minimum du groupe de direction principale de la position examinée, déterminée dans ledit contrôle de cohérence, est choisie comme direction finale de flanc.

2. Procédé selon la revendication 1, caractérisé en ce que les opérateurs, divisés en groupes principaux, sont :

groupe milieu

$$vertical = |c3 - c10| + |c4 - c11|$$

$$right1 = |c4 - c10| + |c5 - c11|$$

$$left1 = |c3 - c11| + |c4 - c12|$$

groupe gauche

$$left2 = |c2 - c11| + |c3 - c12|$$

$$left3 = |c2 - c12| + |c3 - c13|$$

$$left4 = |c1 - c12| + |c2 - c13|$$

groupe droit

$$right2 = |c5 - c10| + |c6 - c11|$$

$$right3 = |c5 - c9| + |c6 - c10|$$

$$right4 = |c6 - c9| + |c7 - c10|$$

où c1, c2, c3, c4, c5, c6 et c7 sont les échantillons sur la rangée supérieure du masque et, de façon correspondante, c8, c9, c10, c11, c12, c13 et c14 sont les échantillons sur la rangée inférieure du masque.

3.  Procédé selon la revendication 2, caractérisé en l'opérateur horizontal est :

$$horizontal = |c4 - c11| - [(max (c3, c4, c5) - min(c3,c4,c5)) + (max(c10,c11,c12) - min(c10,c11,c12))].$$

4.  Procédé selon la revendication 3, caractérisé en ce que lorsque l'opérateur horizontal excède une deuxième valeur définie de seuil, il est considéré qu'il existe un flanc horizontal.

5.  Procédé selon la revendication 1, caractérisé en ce que des contrôles sont effectués sur la base desquels au moins une des directions principales est éliminée comme impropre.

6.  Procédé selon les revendications 2 et 5, caractérisé en ce que dans le premier contrôle (contrôle A) la somme des réponses des opérateurs left2 et left1 est comparée à la somme des réponses des opérateurs right2 et right1, et si la première est supérieure à la dernière, la réponse minimum de la direction principale gauche est éliminée, et dans le cas opposé la réponse minimum de la direction principale droite est éliminée.

7.  Procédé selon la revendication 6, caractérisé en ce que dans le deuxième contrôle (contrôle B) :

    -   une interpolation d'essai est effectuée dans la direction indiquée par l'information de sous-direction de la réponse minimum du groupe principal restant, et
    -   la valeur interpolée d'essai (y) est comparée à l'échantillon au-dessus et au-dessous de la position examinée (X), et si la différence tombe en dehors d'un intervalle défini, la réponse minimum de la direction principale restante est également éliminée.

8.  Procédé selon l'une quelconque des revendications précédentes, caractérisé en ce que le contrôle de cohérence est effectué dans une fenêtre, dont la taille a été choisie, et à chaque position de mémoire (em) de la fenêtre est associée l'information sur la sous-direction des réponses minimum des groupes principaux (dir_left, dir_middle, dir_right), l'information sur le minimum des réponses minimum des groupes principaux (dir_totmin), l'information d'activité (activity), l'information de réponse horizontale (horizontal) et l'information indiquant si la direction du minimum des réponses minimum des groupes principaux (dir_totmin) est dans une certaine direction.

9.  Procédé selon la revendication 8, caractérisé en ce que dans la fenêtre, le nombre de positions actives est calculé et combien il existe de directions principales, et pour que la direction principale avec le nombre le plus grand soit la direction principale dominante, ledit nombre doit être suffisant, par exemple au moins la moitié du nombre de positions actives.

| c1 | c2 | c3 | c4 | c5 | c6 |
|----|----|----|----|----|----|

line (m-1)  field (t)

line (m)  field (t-1)

| c7 | c8 | c9 | c10 | c11 | c12 |
|----|----|----|-----|-----|-----|

line (m+1)  field (t)

Fig. 1

(a) vertical (90)

$R_K$

(b) left   (116)

(c) right  1 (64)

$R_V$

$R_O$

(d) left  2 (135)

(e) right  2 (45)

(f) left  3 (146)

(g) right  3 (34)

(h) left  4 (154)

(i) right  4 (26)

Fig. 2

14

EP 0 687 104 B1

vertical
direction

horizontal
direction

c7
c6
c5
c4
c3
p5
c2
c1 p3 p4 X c14
c13
c11 c12
c10
c9
c8

temporal
direction

**Fig. 3 a**

IN

c14 — c13 — c12 — c11 — c10 — c9 — c8

713*D — c7 — c6 — c5 — c4 — c3 — c2 — c1

286*LM — LM — Even / Odd — 715*D — p5 — p4 — p3 ⋯ /dev/null

**Fig. 3 b**

(a) left4 (154°)

(b) left3 (146°)

(c) left2 (135°)

*Left-group*

(d) right1 (64°)

(e) vertical (90°)

(f) left1 (116°)

*Middle-group*

(g) right4 (26°)

(h) right3 (34°)

(i) right2 (45°)

*Right-group*

## Fig. 4

EP 0 687 104 B1

Fig. 5

EP 0 687 104 B1

17

Fig. 6

EP 0 687 104 B1

Fig. 7b

| | value | label |
|---|---|---|
| b1 | 0 | left4 |
| b2 | 0 | left3 |
| b3 | 1 | left2 |
| b4 | 1 | left1 |
| b5 | 0 | vertical |
| b6 | 0 | right1 |
| b7 | 0 | right2 |
| b8 | 1 | right3 |
| b9 | 1 | right4 |
| b10 | 0 | left |
| b11 | 0 | left-middle |
| b12 | 1 | middle |
| b13 | 1 | right-middle |
| b14 | 0 | right |
| b15 | 0 | horizontal |
| b16 | 1 | activity |

Fig. 7a

IN → e15 → e14 → e13 → e12 → e11 → 715*ci → e10 → e9 → e8 → e7 → e6 → 715*ci → e5 → e4 → e3 → e2 → e1 → /dev/null

Fig. 8 a

Fig. 8 b

```
                    ┌─────────────────────────┐
                    │ (INTDIR[e7]==left1) OR   │
                    │ (INTDIR[e7]==vertical) OR│
                    │ (INTDIR[e7]==right1)     │
                    └─────────────────────────┘
        ┌──────────┐
        │ e7 │ e8 │ e9 │
        └──────────┘
                    ┌─────────────────────────┐
                    │ (INTDIR[e8]==left4) OR   │
                    │ (INTDIR[e8]==left3) OR   │
                    │ (INTDIR[e8]==left2) OR   │      ┌─────┐
                    │ (INTDIR[e8]==right2) OR  │ ───> │ AND │ ───>  INTDIR[e8] = INTDIR[e7]
                    │ (INTDIR[e8]==right3) OR  │      └─────┘
                    │ (INTDIR[e8]==right4)     │            └─> NOT ─> INTDIR[e8] = INTDIR[e8]
                    └─────────────────────────┘
                    ┌─────────────────────────┐
                    │ (INTDIR[e9]==left1) OR   │
                    │ (INTDIR[e9]==vertical) OR│
                    │ (INTDIR[e9]==right1)     │
                    └─────────────────────────┘

                    ┌─────────────────────────┐
                    │ (INTDIR[e7]==horizntal) OR│ ───>  INTDIR[e8] = horizontal
                    │ (INTDIR[e9]==horizontal) │
                    └─────────────────────────┘        └─> NOT ─> INTDIR[e8] = INTDIR[e8]
```

Fig. 9